# EUROPÄISCHE PATENTSCHRIFT

(11) **EP 2 047 663 B1**
(45) Veröffentlichungstag und Bekanntmachung des Hinweises auf die Patenterteilung: **31.03.2010**
(21) Anmeldenummer: 07787458.4
(22) Anmeldetag: 12.07.2007
(51) Int. Cl.: H04M 1/03, H04M 1/20, H04M 1/02

(54) **FERNSPRECHENDGERÄT MIT EINGEBAUTER AKUSTISCHER EINRICHTUNG**
TELEPHONE TERMINAL WITH BUILT-IN AUDIO DEVICE
TERMINAL TÉLÉPHONIQUE AVEC DISPOSITIF ACOUSTIQUE EMBARQUÉ

(30) Priorität: 27.07.2006 DE 102006034852
(43) Veröffentlichungstag der Anmeldung: 15.04.2009
(73) Patentinhaber: Gigaset Communications GmbH, 81379 München (DE)
(72) Erfinder: PIEPER, Stefan, 45721 Haltern am See (DE); RAUBER, Jens, 44227 Dortmund (DE)
(74) Vertreter: Michalski Hüttermann & Partner Patentanwälte
(86) Internationale Anmeldenummer: PCT/EP2007/057187
(87) Internationale Veröffentlichungsnummer: WO 2008/012208

(56) Entgegenhaltungen:
- EP-A- 0 978 978
- GB-A- 2 002 201
- US-A1- 2003 086 562

## Beschreibung

Die vorliegende Erfindung trifft Fer.nsprechendgerät mit einem aus einem Gehäuseunterteil und einem Gehäuseoberteil bestehenden Gehäuse, bei welchem innerhalb des Gehäuses eine akustische Einrichtung vorgesehen ist, und um den Einbauort der akustischen Einrichtung eine mit einem der Gehäuseteile eine Einheit bildende umlaufende Rippe ausgebildet ist, welche in eine auf dem anderen Gehäuseteil ausgebildete Nut eintaucht, wobei die Tiefe der Nut ein mehrfaches ihrer Breite beträgt.

Ein derartiges Fernsprechendgerät ist z. B. aus der US2003/086562 A1 bekannt.

Bei derartigen Fernsprechendgeräten mit eingebauten akustischen Einrichtungen, z.B. mit Lautsprechern, werden durch mechanische und akustische Anregungen Fernsprechteile wie z.B. Gehäuseteile, Leiterplatten, Kontaktfedern usw. in Schwingungen versetzt. Schwingen anliegende Teile gegenphasig mit genügend großer Amplitude, kommt es zu einem aufeinander schlagen. Dies wird als disharmonisches Geräusch, als so genanntes Schleppern, wahrgenommen.

Ein weiteres Problem bei Fernsprechendgeräten mit eingebauten akustischen Einrichtungen ist der Frequenzgang. Der Frequenzgang am Mess- bzw. Hörort ist das Ergebnis der Überlagerung von Direktschall und reflektiertem Schall. Die Quelle beider Schallarten ist die schwingende Lautsprechermembrah, die ein Innenfeld im Gehäuse des Fernsprechendgeräts und ein Außenschallfeld erzeugt. Durch Gehäuseuridichtigkeiten, verursacht durch Steckrand und Gehäusedurchbrüchen von Buchsen und Leitungsführungen, und aufgrund der Schwingfähigkeit des Gehäuses gelangt Innenschall, zum Teil verstärkt durch das Resonanzverhalten von Gehäuseteilen, nach außen. Die Uberlagerung des Innen- und Außenschallfeldes zeigt einen zerklüfteten Frequenzgang. Je nach Phasenlage zwischen abgestrahlten Innen- und Außenschallfeld zeigen sich im Ergebnis der Überlagerung ausgeprägte Resonanzen oder Einbrüche.

Ein weiteres Problem ergibt sich bei Fernsprechendgeräten mit eingebauten Lautsprecher und Freisprechmikrophon, nämlich die so genannte akustische Kopplung. Das besondere Qualitätskriterium eines Freisprechers wird durch seine volle Duplexfähigkeit beschrieben. Da sich der Lautsprecher deutlich näher am Freisprechmikrophon als am Benutzer befindet, kommt es zu einer großen akustischen Kopplung, welche die volle Duplexfähigkeit verhindert. Nur mit großem Aufwand ist eine Annäherung an eine volle Duplexfähigkeit möglich. Insbesondere durch die scharfen Resonanzen des nach außen und/oder aufgrund des undichten Einbaus des Mikrophons nach innen abgestrahlten Schalls erreicht die akustische Kopplung schlechte Ergebnisse.

Um diese oben geschilderten technischen Probleme zu lösen, wurden aufwendige Anstrengungen unternommen.

Um das so genannte Scheppern zu verhindern werden in aufwendigen try and error-Versuchen Gehäuseteile mit Rippen und Andruckdomen derart abgestimmt, dass diese auch im Resonanzfrequenzbereich miteinander verbunden schwingen, d.h. nicht scheppern. Aufgrund der mechanischen Komplexität kann der gesamte Frequenzgang nur unzureichend von dieser Neigung zum Scheppern befreit werden. Durch die Alterung und die damit verbundene Entspannung der vorgespannten Kunststoffteile vergrößert sich das Scheppern. Zur Lösung diese Problems sind zusätzlich geschlossene Gehäuse und aufwendig gestaltete Verrippungen innerhalb des Fernsprechendgerätes bekannt.

Der Frequenzgang bei einem Fernsprechendgerät mit einer eingebauten akustischen Einrichtung wird in der Regel hingenommen und/oder unzureichend mit Equalizieren linearisiert.

Die akustische Kopplung wird durch die mechanische Abstimmung in den Bereichen Dichtigkeit des Mikrophoneinbaus und mechanische Kopplung verbessert. Eine bekannte Möglichkeit ist der Einbau eines zusätzlichen geschlossenen Gehäuses innerhalb des Fernsprechendgeräts. Diese Möglichkeit ist sehr teuer und sehr arbeitsintensiv.

Aufgabe der vorliegenden. Erfindung ist es, ein Fernsprechendgerät der Eingangs genannten Art anzugeben, bei welchem die oben angesprochenen technischen Probleme mit einfachen und preiswerten Mitteln gelöst werden.

Die erfindungsgemäße Aufgabe wird bei einem Fernsprechendgerät der Eingangs genannten Art dadurch gelöst, dass die Nut im Wesentlichen V-förmig ausgebildet ist, das die Seiten der Rippe im Wesentlichen zum Rippenrand hin schräg zusämmenlaufen und das der Querschnitt des Rippenrands teilweise kreisförmig derart ausgebildet ist, dass sich an beiden Seiten der Rippe eine Berührungslinie zwischen Rippe und Nut ergibt.

Dadurch wird erreicht, dass die Rippe an der Oberkante zwei Berührungslinien gegenüber dem Gehäuse aufweist. Aufgrund des langen Dichtspalts ist aber eine ausreichende Abdichtung auch ohne umlaufende Berührung der Rippe in der Nut gewährleistet.

Die Erfindung wird nachstehend anhand eines in der Zeichnung dargestellten beispielhaften Fernsprechendgeräts gemäß der vorliegenden Erfindung näher erläutert.

In der Zeichnung zeigen:
- Figur 1: eine perspektivische Ansicht des Gehäuseunterteils von oben,
- Figur 2: eine perspektivische Ansicht des Gehäuseoberteils von unten,
- Figur 3: ein Schnitt durch das erfindungsgemäße Fernsprechendgerät,
- Figur 4: im Detail die Nut mit der eintauchenden Rippe, und
- Figur 5: eine vergrößerte Detaildarstellung, aus welcher die Berührung zwischen Rippe und Nut zu erkennen ist.

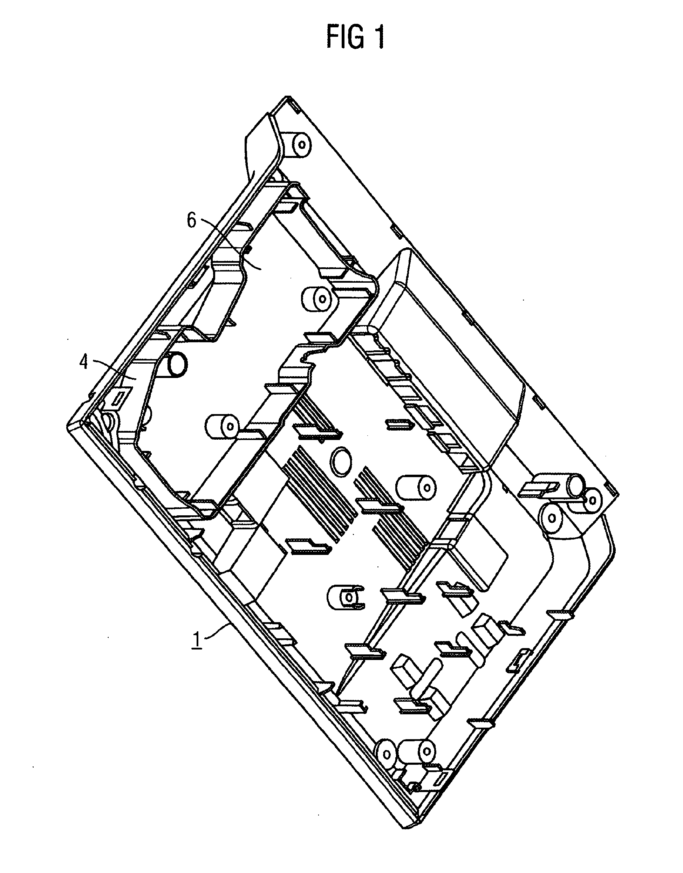

Figur 1 zeigt das Gehäuseunterteil mit der umlaufenden Rippe (4), welche für die akustische Einrichtung, bzw. den Lautsprecher, in Verbindung mit der umlaufenden Nut (5) das Rückkammervolumen (6) ausbildet.

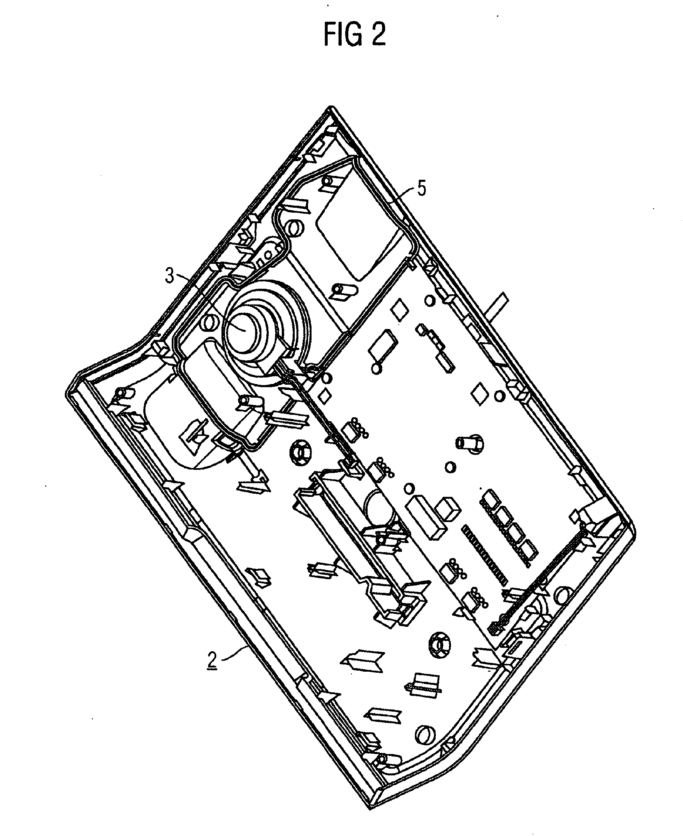

Figur 2 zeigt das Gehäuseoberteil mit der akustischen Einrichtung (3) bzw. dem Lautsprecher (3). Um den Lautsprecher (3) herum ist an das Gehäuseoberteil (2) eine umlaufende Nut (5) angespritzt.

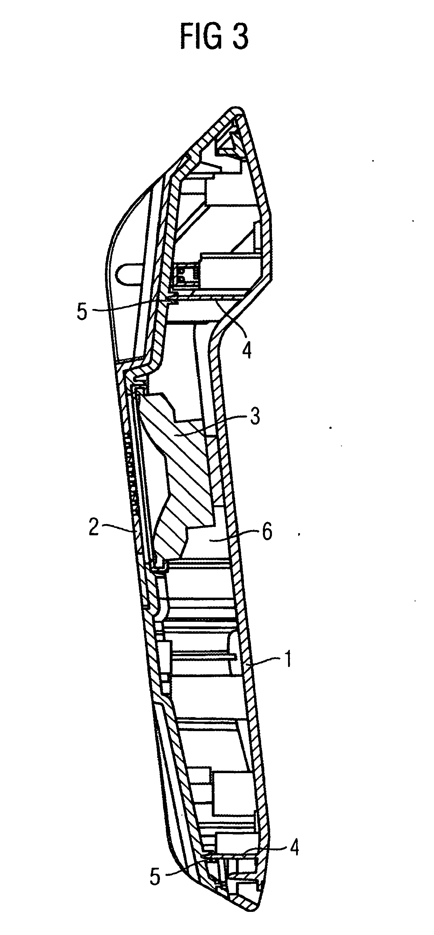

Figur 3 zeigt das Zusammenwirken der umlaufenden Rippe (4) und der umlaufenden Nut (5) im zusammengebauten Zustand zur Bildung des Rückkammervolumens (6).

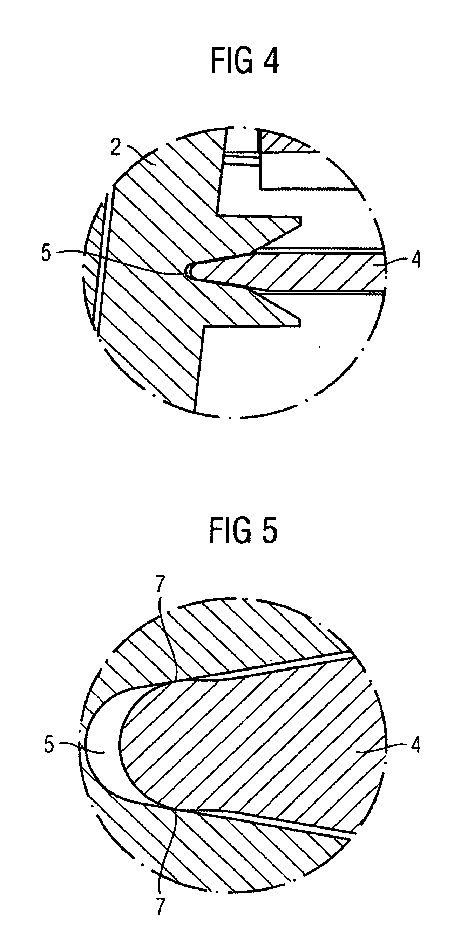

Aus Figur 4 ergibt sich das die Tiefe der Nut (5) ein mehrfaches ihrer Breite beträgt. Weiterhin zeigt die Figur (4), dass sowohl die Nut als auch der Rippenrand im Wesentlichen V-förmig ausgebildet ist.

Die genaue Ausbildung des Rippenrandes ist aus Figur 5 ersichtlich. Hier ist zu erkennen, dass es zwischen der Nut (5) und dem Rippenrand der Rippe (4) zu zwei Berührungslinien (7) kommt.

Der Vorteil des erfindungsgemäßen Fernsprechendgeräts besteht darin, dass keine zusätzlichen Bauteile eingeschraubt oder eingeklebt werden müssen, das geringere Teilekosten entstehen und das ein geringerer Monateaufwand notwendig ist, wobei die Montage komplett automatisierbar ist.

### Bezugszeichenliste

- 1: Gehäuseunterteil
- 2: Gehäuseoberteil
- 3: Akustische Einrichtung
- 4: Rippe
- 5: Nut
- 6: Rückkammervolumen
- 7: Berührungslinie

## Patentansprüche

1. Fernsprechendgerät mit einem aus einem Gehäuseunterteil (1) und einem Gehäuseoberteil (2) bestehenden Gehäuse, bei welchem innerhalb des Gehäuses eine akustische Einrichtung (3) vorgesehen ist, und um den Eibbauort der akustischer Einrichtung (3) eine mit einem der Gehäuseteile (1,2) eine Einheit bildende umlaufende Rippe (4) ausgebildet ist, welche in eine auf dem anderen Gehäuseteil ausgebildete Nut (5) eintaucht, wobei die Tiefe der Nut (5) ein mehrfaches ihrer Breite beträgt,
wobei die Nut (5) im Wesentlichen V-förmig ausgebildet ist, wobei die Seiten der Rippe (4), im Wesentlichen zum Rippenwand hin schräg zusammenlaufen **dadurch gekennzeichnet, dass** der Querschnitt des Rippenrands teilweise kreisförmig derart ausgebildet ist, dass sich an beiden Seiten der Rippe eine Berührungslinie (7) zwischen Rippe (4) und Nut (5) ergibt.

## Claims

1. Telephone terminal with a housing comprising a housing bottom part (1) and a housing top part (2) which provides an audio device (3) inside the housing, and which has a circumferential rib (4) formed around the audio device's installation location (3) forming a unit with one of the housing parts (1, 2), which rib (4) drops into a groove (5) formed on the other housing part, wherein the depth of the groove (5) is a multiple of its width, wherein the groove (5) is substantially V-shaped, wherein the sides of the rib (4) substantially converge inclinedly towards the rib edge, **characterized in that** the cross section of the rib edge is configured partly circular such that a contact line (7) arises on both sides of the rib between the rib (4) and the groove (5).

## Revendications

1. Appareil téléphonique ayant un boîtier constitué d'une partie inférieure de boîtier (1) et d'une partie supérieure de boîtier (2), dans lequel un dispositif (3) acoustique est prévu à l'intérieur du boîtier, et une nervure (4) périphérique, formant une unité avec l'une des parties de boîtier (1, 2), étant conçue autour du lieu de montage du dispositif (3) acoustique, laquelle nervure plonge dans une rainure (5) réalisée sur l'autre partie de boîtier, la profondeur de la rainure (5) étant un multiple de sa largeur, la rainure (5) étant conçue sensiblement en forme de V, les côtés de la nervure (4) convergeant essentiellement en biais en direction du bord de la nervure, **caractérisé en ce que** la section du bord de nervure est conçue en partie en forme circulaire de telle sorte qu'on obtient une ligne de contact (7) entre la nervure (4) et la rainure (5) sur les deux côtés de la nervure.
